# EUROPÄISCHE PATENTANMELDUNG

(11) **EP 2 267 430 A1**
(43) Veröffentlichungstag der Anmeldung: **29.12.2010**
(21) Anmeldenummer: 09163691.0
(22) Anmeldetag: 24.06.2009
(51) Int. Cl.: G01N 15/14

(54) **Vorrichtung und Verfahren zur Selektion von Partikeln**

(71) Anmelder: Masterrind GmbH, 27283 Verden (DE)
(72) Erfinder: Meyer, Heiko, 30419, Hannover (DE); Lorbeer, Raoul Amadeus, 30419, Hannover (DE); Heisterkamp, Alexander, 30419, Hannover (DE); Rath, Detlef, 31535, Neustadt (DE)
(74) Vertreter: Taruttis, Stefan Georg

(57) **Zusammenfassung**

Die Erfindung stellt Vorrichtung und Verfahren zur durchflusszytometrischen Fraktionierung von Partikeln bereit, die in einem Fluidstrom enthalten sind, wobei Abschnitte des Fluidstroms, insbesondere Tröpfchen, wenn der Fluidstrom ein Tröpfchenstrom ist, mit einem Laser bestrahlt werden. Der für die Bestrahlung der Abschnitte des Fluidstroms eingerichtete Laser kann eine Wellenlänge aufweisen, die von dem Fluid absorbiert wird, und eine ausreichende Strahlungsdauer und -intensität, um Abschnitte des Fluidstroms abzulenken.

## Beschreibung

Die Erfindung betrifft Vorrichtung und Verfahren zur Selektion von Partikeln, insbesondere zur durchflusszytometrischen Fraktionierung bzw. Sortierung oder zur gezielten Erwärmung vereinzelter Partikel, die in einem Fluidstrom enthalten sind, in Abhängigkeit von einem detektierten Signal, das für zumindest einen Partikel oder dessen Markierung spezifisch ist. Das Verfahren realisiert die Selektion von Partikeln, insbesondere wenn diese biologische Zellen sind, durch Fraktionierung und/oder durch Erwärmung vereinzelter Partikel. Erfindungsgemäß werden Partikel an einem Detektor vorbei geführt, wobei die Partikel vorzugsweise in einem Fluidstrom enthalten sind, und bevorzugt in dem Fluidstrom vereinzelt sind. Das Fluid kann gasförmig oder flüssig sein und ist vorzugsweise ein Strom von Flüssigkeitströpfchen, die besonders bevorzugt jeweils maximal ein Partikel enthalten. Das detektierte Signal ist vorzugsweise ein optisches Signal, das insbesondere bei einer Wellenlänge detektiert wird, die von einem für den Partikel spezifischen Farbstoff oder Farbstoffkonjugat nach Bestrahlung mit einer Anregungswellenlänge emittiert wird. Die Erzeugung des Partikel enthaltenden Fluidstroms, die Detektion zumindest einer Eigenschaft der in dem Fluidstrom enthaltenen Partikels und die Erzeugung eines Steuersignals aus dem Detektionssignal mit anschließender Steuerung einer Selektionseinrichtung, z.B. einer Fraktionier- bzw. Sortiereinrichtung zur Sortierung bzw. Fraktionierung der Partikel entsprechend des Detektionssignals können durch bekannte Vorrichtungen und Verfahren erfolgen. Die Erfindung stellt Verfahren und Vorrichtung mit einer Selektionseinrichtung bereit, die Abschnitte des Fluidstroms, vorzugsweise Partikel enthaltende Abschnitte des Fluidstroms, ohne Aufbringen von Ladung auf den Fluidstrom und ohne Auslenkung des Fluidstroms im elektrischen Feld ermöglicht. Auf diese Weise vermeidet die Erfindung die Einwirkung elektrischer Spannungen auf Partikel während derer Selektionierung z.B. durch Fraktionierung mittels Ablenkung in 2 oder mehr Fraktionen.

### Stand der Technik

Die US 5,135,759 beschreibt ein FACS-Gerät zur geschlechtschromosomenspezifischen Sortierung von Spermatozoen, die in einem Fluidstrom vereinzelt sind und entsprechend des Signals eines DNA-spezifischen Fluoreszenzfarbstoffs (Hoechst Bisbenzimid H 33342) sortiert werden. Für eine präzise Messung enthält die Vorrichtung der US 5,135,759 neben dem Detektor zur Messung des die gewünschte Partikeleigenschaft kennzeichnenden Signals einen weiteren Detektor, der in einem Winkel zum vorgenannten Detektor angeordnet ist und ein Fluoreszenzsignal der Partikel aufnimmt, das für die Ausrichtung der Partikel im Fluidstrom kennzeichnend ist. Das Steuersignal für die Sortiereinrichtung wird auf Basis des für den DNA-Gehalt der Spermatozoen spezifischen Signals und des für die Ausrichtung der Spermatozoen in dem Fluidstrom kennzeichnenden Signals erzeugt. Die Fraktionierung erfolgt durch Anlegen einer Spannung an den Fluidstrom, um dessen Abschnitte, bzw. die daraus erzeugten Tröpfchen, entsprechend des detektierten Signals aufzuladen, sodass sie beim anschließenden Durchtritt durch ein elektrisches Feld elektrostatisch abgelenkt und in getrennten Fraktionen gesammelt werden.

### Aufgabe der Erfindung

Gegenüber bekannten Vorrichtungen und Verfahren ist es Aufgabe der Erfindung, ein alternatives Verfahren und eine alternative Vorrichtung zur durchflusszytometrischen Fraktionierung von Partikeln in einem Fluidstrom nach einem für die Partikel bzw. deren Marker spezifisch detektierten Signal bereitzustellen. Bevorzugt vermeidet die Erfindung die Einwirkung starker elektrischer Felder auf die Partikel.

### Allgemeine Beschreibung der Erfindung

Bei der Vorbereitung der Erfindung hat sich gezeigt, dass durch die durchflußzytometrische Fraktionierung von tierischen Zellen, insbesondere am Beispiel von Spermatozoen, Schädigungen der Zellen verursacht werden. Solche Zellschäden sind insbesondere Veränderungen der Zellmembran, die sich z.B. bei Spermatozoen in Anomalitäten der Morphologie, der Integrität des Acrosoms und einer verringerten Vitalität zeigt. Gegenwärtig wird angenommen, dass die Beeinträchtigungen von Zellen durch durchflusszytometrische Sortierverfahren, beispielsweise gemäß der US 5,135,759 auf die auf die Zellen einwirkende elektrische Spannung bzw. das elektrische Feld zurückgeht, die zur Separierung von Tröpfchen aus dem Tröpfchenstrom angelegt werden. Denn die dabei angelegten elektrischen Spannungen sind in einer Größenordnung, wie sie auch für die Elektroporation von tierischen Zellen eingesetzt wird, und entsprechende Depolarisationen der Zellmembran auftreten können. Wenn Zellen ein elektrisches Feld durchqueren, wie z.B. im Ablenkungsschritt des Verfahrens der US 5,135,759, treten häufig membranzerstörende Sauerstoffradikale auf.

Bei der Vorbereitung der vorliegenden Erfindung haben Analysen von Spermatozoen, die nach dem Verfahren der US 5,135,759 ein elektrisches Feld durchquerten gezeigt, dass allein durch das elektrische Feld Veränderungen des Spermienmittelstücks verursacht. So zeigen elektronenmikroskopische Aufnahmen von Spermatozoen, die ein solches elektrisches Feld im Sortierverfahren durchquerten, strukturelle Veränderungen der Zellwand, zum Teil sogar Einrisse, und strukturelle Veränderungen des Spermienmittelstücks und insbesondere veränderte Mitochondrien, z.B. aufgeweitete Christae von Mitochondrien. Solche Veränderungen wurden nicht beobachtet, wenn die Spermien das selbe Sortierverfahren durchliefen, jedoch ohne Anlegen von Spannung an die Platten, die das elektrische Feld zur Ablenkung geladener Partikel zwischen sich erzeugen.

Die Erfindung löst die Aufgabe mit den Merkmalen der Ansprüche und stellt insbesondere Vorrichtung und Verfahren zur durchflusszytometrischen Fraktionierung von Partikeln bereit, die in einem Fluidstrom enthalten sind, wobei Abschnitte des Fluidstroms, insbesondere Tröpfchen, wenn der Fluidstrom ein Tröpfchenstrom ist, mit einem Laser bestrahlt werden. Der für die Bestrahlung der Abschnitte des Fluidstroms eingerichtete Laser kann in einer ersten Ausführungsform eine Wellenlänge aufweisen, die von dem Fluid absorbiert wird und eine ausreichende Strahlungsdauer und -intensität hat, um einen Teil des Fluids zu erwärmen. In dieser ersten Ausführungsform ist die Selektionseinheit auch als Sortiereinheit zu bezeichnen. Wenn das Fluid eine Flüssigkeit ist, bringt die auf einen Abschnitt des Flüssigkeitsstroms einwirkende Laserbestrahlungen eine Gesamtenergie auf den Abschnitt des Flüssigkeitsstroms, die einen Teil der Flüssigkeit zu verdampfen lässt. Durch die Laserinduzierte lokale Verdampfung wird der mit der Laserbestrahlung bestrahlte Abschnitt des Flüssigkeitsstroms in die zur Laserbestrahlung entgegengesetzte Richtung beschleunigt. Diese durch Laserbestrahlung erzeugte Beschleunigung vermittelt diesem Abschnitt des Fluidstroms eine andere Bewegungsrichtung, bzw. eine andere Flugbahn als dem nicht-bestrahlten Fluidstrom. Der laserbestrahlte Abschnitt des Fluidstroms kann daher in einem Auffanggefäß aufgefangen werden, das in einem Abstand zu der von dem nicht bestrahlten Flüssigkeitsstrom eingenommen Flugbahn angeordnet ist.

In einer zweiten Ausführungsform, in der die Selektionseinheit auch als Erwärmungseinheit bezeichnet werden kann, emittiert der Laser bei einer Wellenlänge, die nicht von dem Fluid absorbiert wird, sondern für die das Fluid optisch im Wesentlichen transparent ist, sodass die Laserstrahlung auf das in einem Abschnitt des Fluidstroms enthaltenen Partikel wirken kann. In dieser Ausführungsform erfolgt eine Sortierung bzw. Fraktionierung dadurch, dass Partikel innerhalb des Fluidstroms gezielt erwärmt werden. Insbesondere bei Ausführungsformen des Verfahrens, in denen Partikel biologische Zellen sind, insbesondere tierische Zellen, besonders bevorzugt Spermatozoen, wird durch die Erwärmung die biologische Aktivität der Zelle verändert, insbesondere werden durch Erwärmung Zellen gezielt inaktiviert. Daher umfasst für die Zwecke der Erfindung der Begriff der Fraktionierung oder Sortierung auch die gezielte Inaktivierung zumindest eines Anteils der Partikel, und Sammeln der mittels Laserstrahlung behandelten Partikel in Mischung mit den nicht gezielt durch Laserbestrahlung erwärmten Partikel. In dieser Ausführungsform ist eine Abtrennung der mittels Laserbestrahlung veränderten Partikel, insbesondere inaktivierter Zellen von den nicht inaktivierten Zellen nicht erforderlich, da die inaktivierten Zellen keine biologische Aktivität mehr aufweisen, beispielsweise im Falle von Spermatozoen, von denen ein Anteil inaktiviert ist, insbesondere ein geschlechtschromosomenspezifischer Anteil inaktiviert ist.

Die erfindungsgemäße Vorrichtung weist eine Düse zur Erzeugung eines Partikel enthaltenen Fluidstroms auf, und vorzugsweise eine Pumpe oder angeschlossene Druckquelle. In einem Abstand zur Austrittsöffnung der Düse ist eine Bestrahlungseinrichtung angeordnet, deren Strahlung auf den aus der Düse austretenden Fluidstrom gerichtet ist, und gegenüber der Bestrahlungseinrichtung oder einem Winkel zu dieser ein Detektor, dessen Sensoroberfläche auf den Fluidstrom gerichtet ist. Der Detektor ist vorzugsweise ein optischer Detektor, dessen Sensoroberfläche vorzugsweise mit einem für vorgewählte Wellenlängen durchlässigen optischen Element versehen ist, welches Strahlung anderer Wellenlängen ausschließt. Auf diese Weise kann der Detektor auf eine vorgewählte Wellenlänge eingestellt sein, vorzugsweise die Wellenlänge, die von einem für das Partikel spezifischen Farbstoff bzw. von einem mit dem Partikel assoziierten Farbstoff oder Farbstoffkonjugat emittiert wird. Zur Anregung der Emission von Strahlung von einem Farbstoff oder Farbstoff-Konjugat, mit dem das Partikel kontaktiert ist, ist die Bestrahlungseinrichtung vorzugsweise eingerichtet, eine Anregungswellenlänge zu emittieren.

Der Detektor ist mit einer Steuerungseinheit verbunden, die die vom Detektor abgegebenen Meßsignale aufnimmt und eingerichtet ist, auf Basis dieser Meßsignale Steuersignale für eine Selektionseinheit zu erzeugen und an diese zu übermitteln. Generell kann eine Einrichtung zur Erzeugung eines Partikel enthaltenden Fluidstroms mit einer Düse, aus der der Fluidstrom austritt, einer in einem Abstand zur Düse angeordneten Bestrahlungseinrichtung und einem der Bestrahlungseinrichtung zugeordneten Detektor, der mit einer Steuerungseinheit verbunden ist, den funktionsgleichen Einrichtungen eines FACS-Geräts entsprechen, insbesondere eines FACS-Geräts entsprechend der US 5,135,759, deren Offenbarung durch Bezugnahme in die Beschreibung aufgenommen ist.

Die erfindungsgemäße Vorrichtung weist eine Selektionseinheit auf, die einen Laser umfasst, dessen Strahlengang auf dem Fluidstrom gerichtet ist, vorzugsweise auf einen Abschnitt des Fluidstroms gerichtet ist, der in einer zweiten Position in einem größeren Abstand zur Düse angeordnet ist, als die erste Position, in der der Abschnitt des Fluidstroms angeordnet ist, auf welchen die Strahlung der Bestrahlungseinrichtung gerichtet ist. Auf diese Weise ist der Laser der Selektionseinheit, auch Selektionslaser oder Sortierlaser genannt, so angeordnet, dass sein Strahlengang auf einen Abschnitt des Fluidstroms in einer zweiten Position gerichtet ist, der im Strömungsweg des Fluids, bzw. in der Flugbahn von Tröpfchen aus dem Fluid stromabwärts der ersten Position des Abschnitts des Fluidstroms angeordnet ist, in welchem die Bestrahlungseinrichtung zur Detektion auf den Fluidstrom gerichtet ist, und die Detektion erfolgt. Auf diese Weise wird ein Abschnitt des Fluidstroms zunächst in einer ersten Position durch Bestrahlung und Detektion eines für einen Partikel spezifischen Signals detektiert und in einem zeitlichen Abstand in einer zweiten, stromabwärts angeordneten Position der Fraktionierung mittels des Sortierlasers unterworfen. Zur Koordinierung der Strahlung des Sortierlasers für die Bestrahlung der zweiten Position des selben Abschnitts des Fluidstroms, für den ein Meßsignal in der ersten Position detektiert wurde und der mit dem zeitlichen Abstand der Fluidströmung denselben Partikel enthält, weist die Steuerungseinheit vorzugsweise eine Verzögerungseinheit auf, die Steuersignale für die Steuerung des Sortierlasers um einen vorbestimmten Betrag zeitlich verzögert.

Zur Steuerung der Laserstrahlung, die vom Sortierlaser emittiert wird, kann dessen Lasermedium selbst von der Steuerungseinheit gesteuert werden, insbesondere zur Erzeugung von Laserstrahl-Impulsen in Abhängigkeit von Steuersignalen. Bevorzugt ist der Sortierlaser ein kontinuierlicher (CW-) Laser, insbesondere ein Festkörper- oder CO₂-Laser in dessen Strahlengang zumindest ein mit der Steuereinheit verbundenes und von dieser gesteuertes optisches Element angeordnet ist, beispielsweise ein optischer Schalter, dessen Transmission durch die Steuerungseinheit gesteuert wird.

Besonders bevorzugt ist im Strahlengang des Sortierlasers eine Fokussiereinrichtung angeordnet, beispielsweise ein Mikroskopobjektiv, welche die Laserstrahlung des Sortierlasers auf einen Abschnitt des Fluidstroms fokussiert. Besonders bevorzugt ist der Detektor in einem optischen Pfad angeordnet, der durch die Fokussiereinrichtung verläuft, die im Strahlengang des Sortierlasers angeordnet ist, wobei der Strahlengang des Sortierlasers von demjenigen der Strahlung, die zum Detektor gerichtet ist, durch eine beabstandete Anordnung dieser Strahlengänge durch die Fokussiereinrichtung getrennt ist. Dabei kann der Strahlengang, der aus der Fokussiereinrichtung zum Detektor gerichtet ist, von dem Strahlengang des Sortierlasers durch einen Strahlteiler getrennt werden, der den Strahlengang vom Sortierlaser zur Fokussiereinrichtung oder den Strahlengang von der Fokussiereinrichtung zum Detektor umlenkt, während der Strahlteiler für den jeweils anderen Strahlengang durchlässig ist.

Anstelle der Anordnung des Detektors so, dass dessen Strahlengang durch die Fokussiereinrichtung des Sortierlasers verläuft, kann die Bestrahlungseinrichtung zur Anregung der Fluoreszenz eines mit dem Partikel kontaktierten Farbstoffs oder Farbstoffkonjugats so angeordnet sein, dass dessen Anregungsstrahlung in einem Abstand zum Strahlengang des Sortierlasers in dessen Fokussiereinrichtung eingekoppelt wird. In dieser Ausführungsform ist der Detektor vorzugsweise so angeordnet, dass seine Sensoroberfläche in einem Strahlengang angeordnet ist, der in einem Winkel zum Strahlengang der Bestrahlungseinrichtung zur Fluoreszenzanregung liegt.

Die Steuereinheit ist mit einem Programm eingerichtet, das in Abhängigkeit von der Intensität eines vom Detektor übermittelten Detektionssignals Steuersignale erzeugt und an den Sortierlaser und/oder optische Elemente in dessen Strahlengang übermittelt, die geeignet sind, die Strahlung des Sortierlasers in Abhängigkeit von dem Detektionssignal mit zeitlicher Verzögerung auf einen beabstandeten Abschnitt des Fluidstroms gerichtet wird, z.B. in der zweiten Position, die in einem Abstand stromabwärts der ersten Position des Abschnitts des Fluidstroms, in welcher der Detektor emittierte Strahlung aufgenommen und ein Detektionssignal erzeugt hat. Durch die Anordnung des Abschnitts, auf den die Laserstrahlung des Sortierlasers einwirkt, in einer zweiten Position in einem Abstand und stromabwärts des Abschnitts, auf den der Detektor und/oder eine Anregungsstrahlungsquelle in der ersten Position gerichtet ist, kann durch eine zeitliche Verzögerung der Laserbestrahlung zur Detektion um die Dauer der Fluidbewegung zwischen der ersten Position und der zweiten Position der Abschnitt des Fluidstroms, der das detektierte Partikel enthält, mit der Strahlung des Sortierlasers bestrahlt werden.

Die Vorrichtung kann neben einem Detektor zur Messung eines Meßsignals auch einen oder mehrere zweite Detektoren aufweisen, die Eigenschaften von Partikeln und/oder des Fluids messen. Bevorzugt weist die Vorrichtung einen zweiten Detektor, wahlweise auch eine zweite Anregungslichtquelle auf, deren Strahlung auf den Fluidstrom gerichtet ist, wobei der zweite Detektor besonders bevorzugt ein Fluoreszenzsignal für die Partikel aufnimmt und an die Steuerungseinheit übermittelt, aus welchen die Steuerungseinheit die relative Ausrichtung der Partikel, insbesondere von nicht rotationssymmetrischen Partikeln wie Spermatozoen identifiziert und die Steuerungseinheit auch auf Basis dieses zweiten Detektionssignals in Kombination mit dem ersten Detektionssignal eines Detektors das Steuersignal erzeugt.

In einer besonderen Ausführungsform ist im Strahlengang des Sortierlasers ein Strahlteiler angeordnet, der den optischen Pfad bzw. Strahlengang des Sortierlasers in einen ersten und einen zweiten Teilpfad aufteilt bzw. richtet, die jeweils auf den Fluidstrom gerichtet sind. Der erste und zweite Teilpfad können auf beabstandete Abschnitte des Fluidstroms gerichtet sein, beispielsweise auf Abschnitte des Strömungswegs des Fluids, bzw. der Flugbahn von Tröpfchen für einen Fluidstrom aus Flüssigkeitströpfchen. Auf diese Weise kann derselbe Abschnitt des Fluidstroms in einem zeitlichen Abstand von Laserstrahlung entlang des ersten und/oder zweiten Teilpfads bestrahlt werden. Vorzugsweise ist im ersten Teilpfad ein erster optischer Schalter angeordnet, und im zweiten Teilpfad ein zweiter optischer Schalter, die jeweils mit der Steuerungseinheit verbunden sind und von dieser gesteuert werden. Für die Ausrichtung zumindest eines von erstem und zweiten Teilpfad auf den Fluidstrom sind Spiegel in diesen angeordnet.

Weiter kann die Vorrichtung neben einem ersten Sortierlaser einen oder mehrere zweite Sortierlaser aufweisen, deren Strahlengang ebenfalls auf den Fluidstrom gerichtet ist, wobei zweite Sortierlaser dieselbe oder eine andere Wellenlänge emittieren. Auf diese Weise kann die Genauigkeit des Sortierverfahrens erhöht werden, wenn der erste Sortierlaser Strahlung mit einer Wellenlänge abstrahlt, die vom Fluid absorbiert wird und zu dessen abschnittsweiser Auslenkung führt, während ein zweiter Sortierlaser Strahlung einer Wellenlänge abstrahlt, für die das Fluid durchlässig ist und die vom Partikel absorbiert wird und zu dessen Erwärmung führt. Alternativ oder zusätzlich kann ein zweiter Sortierlaser zur Erzeugung von Strahlung einer Wellenlänge eingerichtet sein, die vom Fluid absorbiert wird, um Abschnitte des Fluidstroms abzulenken. Bei einem zweiten Sortierlaser, der Strahlung mit einer vom Fluid absorbierbaren Wellenlänge erzeugt, ist bevorzugt dessen auf den Fluidstrom gerichteter Abschnitt des Strahlengangs in einem Winkel von 30° bis 180°, bevorzugter von 60° bis 90° zu dem auf den Fluidstrom gerichteten Abschnitt des Strahlengang des ersten Sortierlasers angeordnet.

Zweite Sortierlaser können wie der erste Sortierlaser mit der Steuerungseinheit verbunden und von deren Steuersignalen gesteuert sein, die in Abhängigkeit von Detektionssignalen des Detektors erzeugt sind. Für Ausführungsformen, in deren Selektionseinheit ein oder mehrere zweite Sortierlaser enthalten sind, ist bevorzugt, dass diese auf eine dritte bzw. weitere Position des Fluidstroms gerichtet sind, die jeweils weiter von der Düse entfernt ist, als die zweite Position, um zweite Sortierlaser unabhängig vom ersten Sortierlaser weiter stromabwärts auf den Fluidstrom zu richten.

Die Beschreibung des erfindungsgemäßen Verfahrens gilt auch als Beschreibung der Einrichtung der Bestandteile der Vorrichtung zur Durchführung der genannten Verfahrensschritte; die Beschreibung der erfindungsgemäßen Vorrichtung bezieht sich auch auf die damit durchgeführten Verfahrensschritte entsprechend der beschriebenen Funktionsweise der Bestandteile der Vorrichtung. Entsprechend ist erfindungsgemäße Vorrichtung zur Verwendung in einem erfindungsgemäßen Verfahren geeignet. Vorzugsweise betrifft das Verfahren die geschlechtschromosomenspezifische Sortierung bzw. Inaktivierung von nicht-menschlichen Säugergameten, insbesondere von nicht-menschlichen Säugerspermatozoen, insbesondere des Rinds, des Schweins, des Pferds, des Schafs und des Kamels.

Das erfindungsgemäße Verfahren zur Sortierung von Partikeln umfasst die Ausbildung eines Partikel enthaltenden Fluidstroms, insbesondere durch Pumpen des Fluids, beispielsweise mittels einer Pumpe oder durch Druckbeaufschlagung, z.B. durch Anschluss einer Überdruckquelle, Detektieren einer Eigenschaft der Partikel in dem Fluidstrom und Erzeugen eines Detektionssignals für die detektierte Eigenschaft, Erzeugen eines Steuersignals nach dem Detektionssignal, vorzugsweise mit einer zeitlichen Verzögerung des Steuersignals, Steuern einer Selektionseinheit durch das Steuersignal, wobei die Partikel in zumindest zwei Fraktionen mittels einer Selektionseinheit sortiert werden, wobei das Sortieren durch gezielte Laserbestrahlung zumindest eines Abschnitts des Fluidstroms und Sammeln des laserbestrahlten Abschnitts und/oder des nicht laserbestrahlten Abschnitts des Fluids umfasst. Vorzugsweise wird der Fluidstrom durch Ausströmenlassen des Partikel enthaltenden Fluids durch eine Düse erzeugt. Besonders bevorzugt ist der Fluidstrom ein Strom aufeinander folgender Tröpfchen des Fluids, auch als Tröpfchenstrom bezeichnet, sodass ein Fluidtröpfchen ein Abschnitt des Fluidstroms ist, in dem vorzugsweise jeweils ein Partikel enthalten ist. Weiter bevorzugt werden in dem Verfahren nicht-menschliche Säugerspermatozoen als Partikel eingesetzt und selektiert, insbesondere nach Kontaktieren mit einem DNA-spezifischen Farbstoff oder einem geschlechtschromosomenspezifischen Farbstoffkonjugat.

Das Sammeln erfolgt vorzugsweise durch Auffangen von Abschnitten des Fluidstroms in Sammelbehältern, die in der Strömungs- bzw. Flugbahn des nicht laserbestrahlten Fluidstroms angeordnet sind, und oder Sammelbehältern, die in einem Abstand zur nicht laserbestrahlten Strömungs- bzw. Flugbahn des Fluidstroms angeordnet sind, wobei die Laserbestrahlung von Abschnitten des Fluidstroms zur Auslenkung diese Abschnitte des Fluidstroms führt und sich diese in einem Abstand zu Strömungs- bzw. Flugbahn des nicht laserbestrahlten Fluidstroms bewegen.

In der ersten Ausführungsform der Erfindung hat die Laserstrahlung des Sortierlasers eine Wellenlänge, die vom Fluid absorbiert wird, sodass sich der laserbestrahlte Abschnitt des Fluidstroms in einem Bereich, insbesondere in dem laserbestrahlten Oberflächenabschnitt erwärmt, insbesondere verdampft, und dieser Abschnitt des Fluidstroms in die der Laserbestrahlung entgegengesetzte Richtung beschleunigt bzw. abgelenkt wird. Wenn das Fluid Wasser ist, liegen bevorzugte Wellenlängen, die der Sortierlaser abstrahlt, im Bereich von < 200 nm oder im Bereich von 2 bis 6,45 µm, insbesondere von 2 bis 3 µm.

In der zweiten Ausführungsform emittiert der Sortierlaser Laserstrahlung, die nicht im Bereich der Absorption des Fluids liegt, sondern im Wesentlichen ohne Absorption durch das Fluid hindurch treten kann, jedoch von Partikeln absorbiert wird. In dieser Ausführungsform werden Partikel durch die Laserbestrahlung erwärmt, was z.B. für biologische Zellen zu einer Inaktivierung führt. Bevorzugt hat ein solcher Laser in dieser Ausführungsform eine Wellenlänge von ca. 800-1.600 nm, bevorzugt von ca. 1.000-1.100 nm, besonders bevorzugt 1041 nm.

Vorzugsweise wird die Strahlung des Sortierlasers in einen ersten und zweiten optischen Pfad aufgeteilt, die aus unterschiedlichen Richtungen auf den gleichen oder auf unterschiedliche Abschnitte des Fluidstroms gerichtet sind. Zur Sortierung von Partikeln in dem Fluidstrom wird die Laserstrahlung im ersten und zweiten optischen Pfad unabhängig voneinander, jeweils gesteuert von Steuerungseinheit, auf den Fluidstrom gerichtet. Auf diese Weise können mit einem Sortierlaser in beabstandeten Positionen angeordnete Abschnitte des Fluidstroms unabhängig voneinander, gleichzeitig oder nacheinander, in zwei unterschiedliche Richtungen abgelenkt werden bzw. erwärmt werden, wie dies mit Bezug auf die erste bzw. zweite Ausführungsform beschrieben ist.

Bevorzugt wird bei dem Verfahren zur Sortierung ein für eine Eigenschaft von Partikeln spezifischer Farbstoff oder ein Farbstoffkonjugat, insbesondere ein Fluoreszenzfarbstoff bzw. ein Fluoreszenzfarbstoffkonjugat zugesetzt, das spezifisch einen Teil der Partikel markiert.

Bei einem bevorzugten Verfahren werden Zellen sortiert, und das Farbstoffkonjugat weist einen spezifischen Bindeanteil auf, beispielsweise einen Antikörper oder einen ein Paratop enthaltenden Bindeanteil eines natürlichen oder synthetischen Antikörpers und einem Farbstoffanteil, insbesondere einen Fluoreszenzfarbstoff. Zur Identifikation von Partikeln mit einer bestimmten Nukleinsäuresequenz kann das Farbstoffkonjugat eine spezifische Nukleinsäuresequenz aufweisen, insbesondere eine für eine Einzelnukleotidmutation (SNP) oder für ein Geschlechtschromosom spezifische Nukleinsäuresequenz.

Ein Farbstoffkonjugat kann alternativ oder zusätzlich zu einem Fluoreszenzfarbstoff einen Nanopartikel aufweisen, vorzugsweise einen Nanopartikel in metallischer Form insbesondere ausgewählt aus der Gruppe, die Gold, Silber, Titan, Platin, Iridium, Tantal, Eisen, Nickel, Kobalt und Kupfer und Mischungen dieser, insbesondere Eisen- Nickel- Legierungen und Kobalt- Samarium -Legierungen umfasst, oder in Form eines Metalloxids, insbesondere ausgewählt aus der Gruppe, die Oxide von Titan, Zink und Eisen, insbesondere ferromagnetische Metalloxide umfasst.

Es sich gezeigt, dass bei dem mit der Vorrichtung durchgeführten Sortierverfahren von Partikeln auch bei hohen Durchflussraten bzw. hohen Sortierraten eine hohe Sortenreinheit einer abgetrennten Fraktion entsprechend des detektierten Signals erhältlich ist, z.B. im Vergleich mit dem Sortierverfahren gemäß der US 5,135,759 eine höhere Ausbeute und höhere Sortenreinheit einer entsprechend eines detektierten Signals hergestellten Fraktion von Spermatozoen, insbesondere bei geschlechtschromosomenspezifischer Sortierung unter Verwendung der Färbung der Gesamt-DNA mit Hoechst Bisbenzimid H 33342, bei gleicher Auflösung der Detektion.

Überdies weisen mit dem erfindungsgemäßen Verfahren hergestellte Spermatozoenfraktionen geringere Schäden und eine höhere Motilität und Fruchtbarkeit auf, insbesondere eine gegenüber mittels vorbekannter Sortierverfahren hergestellten Fraktionen signifikant geringere Acrosomenschädigung, wie beispielsweise durch Analyse mit Propidiumiodid und/oder PSA (*Pisum sativum* Agglutinin) nachweisbar ist. Auch morphologische Veränderungen sind bei erfindungsgemäß sortierten Spermatozoen-Fraktionen signifikant gegenüber herkömmlich erzeugten Fraktionen reduziert, insbesondere bei gleicher Sortierrate.

Entsprechend bezieht sich die Erfindung auch auf aus einer gemischten Zellpopulation abgetrennte Zellfraktionen, insbesondere geschlechtschromosomenspezifisch sortierte Spermatozoen. Solche Fraktionen sind gegenüber herkömmlich erzeugten Fraktionen durch signifikant verringerte Acrosomenschädigungen gekennzeichnet, insbesondere einen signifikant verringerten Anteil von Acrosomenschäden, die beispielsweise durch Reaktion mit Propidiumiodid und/oder PSA nachweisbar sind, sowie einen signifikant verringerten Teil morphologischer Veränderungen im Vergleich zur unsortierten Zellpopulation. Besonders bevorzugt liegt der Anteil von Zellen, insbesondere von Spermatozoen in der erfindungsgemäß hergestellten Fraktion, um weniger als 20%, insbesondere weniger als 10% über dem Anteil dieser Schäden in einem Aliquot der unsortierten Zellpopulation.

Weiter bevorzugt weisen die erfindungsgemäß hergestellten Fraktionen von Spermatozoen eine erhöhte Lebensfähigkeit auf, die unter gleichen Bedingungen als Motilität mittels CASA gemessen um weniger als 20%, bevorzugt um weniger 10% geringer ist als diejenige eines Aliquots der unsortierten Zellpopulation. Entsprechend unterscheiden sich erfindungsgemäß hergestellte Spermapräparate, insbesondere geschlechtschromosomenspezifisch sortierte Spermatozoen deutlich von Fraktionen, die mit einem herkömmlichen Sortierverfahren erzeugt wurden. Die Unterschiede sind insbesondere gegenüber Spermatozoen deutlich, die nach dem Verfahren der US 5,125, 759 in Tris-Puffer sortiert wurden, z.B. durch einen wesentlich höheren Anteil motiler Spermien in mit dem erfindungsgemäßen Verfahren hergestellten Präparaten. So zeigen erfindungsgemäß erzeugte Präparate nach ca. 6 h Inkubation bei 37 °C in Tris-Puffer einen Anteil motiler Spermatozoen von mindestens 55% bis mindestens 90% der Motilität unsortierter Spermien eines Aliquots, während bei nach dem Verfahren der US 5,125, 759 sortierten Fraktionen nach der gleichen Inkubation die Motilität auf ca. 10% gefallen war, jeweils automatisiert mittels CASA gemessen. Entsprechend zeichnen sich erfindungsgemäße, geschlechtschromosomenspezifisch zu mindestens 90 bis 95% reine Y-chromosomenhaltige oder X-chromsomenhaltige Spermapräparate durch einen Anteil motiler Zellen von mindestens 55% bis mindestens 90% nach einer Inkubation bei 37°C für 6h in Tris-Puffer aus. Die Motilität wird jeweils automatisiert mit CASA bestimmt.

Erfindungsgemäß hergestellte Spermatozoenfraktionen haben vorzugsweise neben dem hohen Anteil motiler Spermatozoen eine intakte Membran und ein intaktes Acrosom bei einem Anteil von zumindest 80 % bis zumindest 90 % der sortierten Spermatozoen, insbesondere geschlechtschromosomenspezifisch sortierter Spermatozoen.

Weiter bevorzugt haben erfindungsgemäß durch spezifische Ablenkung eines Teils der Zellen hergestellte Zellfraktionen, insbesondere geschlechtschromosomenspezifisch in Fraktionen sortierte Spermatozoen einen Anteil von strukturell veränderten bzw. geschädigten Zellen, der sich nicht signifikant von dem Anteil strukturell veränderter bzw. geschädigter Zellen in der ursprünglichen Zellpopulation unterscheidet und insbesondere gleich hoch ist wie der Anteil strukturell veränderter bzw. geschädigter Zellen in der ursprünglichen Zellpopulation. Besonders bevorzugt ist die strukturelle Veränderung bzw. Schädigung eine Veränderung der Mitochondrien, die z.B. elektronenmikroskopisch sichtbar ist, und/oder für Spermatozoen eine Veränderung des Spermienmittelstücks, die z.B. elektronenmikroskopisch sichtbar ist. Entsprechend weisen erfindungsgemäß durch Vereinzelung mittels Ablenkung von Zellen im Fluidstrom sortierte Zellfraktionen, insbesondere Spermatozoenfraktionen, z.B. geschlechtschromosomenspezifisch sortierte Spermafraktionen, strukturelle Veränderungen bzw. Schäden auf, z.B. Veränderungen der Mitochondrienstruktur, wie sie auch die nicht erfindungsgemäß behandelten Zellen aufweisen.

Daher betrifft die Erfindung auch Präparate lebender isolierter Zellen, ausgenommen menschliche Keimzellen, die aus einer gemischten Zellpopulation stammen und in zumindest einer Eigenschaft homogen sind und deren Mitochondrien eine natürliche Struktur haben, bzw. keinen höheren Anteil an geschädigten Mitochondrien als die spezifischen Zellen der Ausgangspopulation. Die Struktur wird vorzugsweise elektronenmikroskopisch bestimmt, für Spermatozoen alternativ oder zusätzlich auch als Motilität, z.B. mittels CASA.

Diese Eigenschaften der erfindungsgemäß hergestellten Spermatozoenpräparate lassen sich mit Fluiden ohne Gehalt an Immobilisierungsmittel erzeugen, so dass diese Eigenschaften auch für erfindungsgemäß hergestellte geschlechtschromosomenspezifisch sortierte Spermapräparate gelten, die nicht mit Immobilisierungsmittel kontaktiert wurden und kein Immobilisierungsmittel enthalten, insbesondere für geschlechtschromosomenspezifisch sortierte Spermapräparate, die kein Fluorid enthalten.

Die Vorrichtung ist vorzugsweise für die Laserbestrahlung von Partikeln im Fluidstrom mit einer Rate von 500 Partikel/s bis 6000 Partikel/s eingerichtet, so dass bei Fraktionierung mittels Laserbestrahlung mit einer vom Fluid absorbierbaren Wellenlänge die Sortierrate für die mittels Laserbestrahlung abgelenkten Partikel dem spezifische Anteil von 500 Partikel/s bis 6000 Partikel/s beträgt, bzw. bei Laserstrahlung mit einer nicht vom Fluid absorbierbaren Wellenlänge die Behandlungsrate dem spezifischen Anteil von 500 Partikel/s bis 6000 Partikel/s beträgt. Vorzugsweise ist die Vorrichtung und das Verfahren eingerichtet, den Fluidstrom mit einer Erkennungsrate von 60 000 bis 70 000/s zu detektieren. Das erfindungsgemäße Verfahren erlaubt höhere Sortierraten und bei gleichen Sortierraten eine höhere Ausbeute als die Ablenkung geladener Tröpfchen im elektrischen Feld, weil eine Repolarisation des Tröpfchenstroms, wie sie beim Aufbringen elektrischer Ladung auf den abreißenden Tröpfchenstrom auftritt, nicht erforderlich ist. Beim erfindungsgemäßen Verfahren kann daher die Selektion der vereinzelten Partikel erfolgen, ohne dass die benachbarten Partikel von der Selektion mittels Laserbestrahlung beeinflusst werden. Im Unterschied dazu werden bei Ablenkung im elektrischen Feld bei üblichen Durchlaufraten von bis zu 2500 Partikel/s 3 bis 5 aufeinander folgende Fluidtröpfchen mit gleicher Ladung beaufschlagt und daher unabhängig vom Partikel in die gleiche Fraktion sortiert.

### Genaue Beschreibung der Erfindung

Die Erfindung wird nun genauer anhand von Beispielen mit Bezug auf die Figuren beschrieben, in denen
- Figur 1 eine schematische Ansicht einer erfindungsgemäßen Vorrichtung zeigt,
- Figur 2 eine um 90° gedrehte Ansicht der Vorrichtung nach Figur 1 zeigt,
- Figur 3 eine alternative Ausführungsform der erfindungsgemäßen Vorrichtung zeigt,
- Figur 4 eine Ausführungsform der Vorrichtung mit Aufteilung der Laserstrahlung des Sortierlasers in zwei Teilpfade zeigt,
- Figur 5 einen Fluidstrom in Form von Tröpfchen zeigt, unter A) ohne Laserbestrahlung durch den Sortierlaser, und unter B) die Ablenkung von Tröpfchen durch Bestrahlung mit dem Sortierlaser, und
- Figur 6 unter A) einen Fluidstrom in Form eines Tröpfchenstroms ohne Laserbestrahlung mit dem Sortierlaser, und unter B) die Auslenkung von Tröpfchen durch Bestrahlung mit dem Sortierlaser bei höherer Laserleistung als in Figur 5 verwendet.

In den Figuren werden für funktionsgleiche Elemente jeweils dieselben Bezugsziffern verwendet.

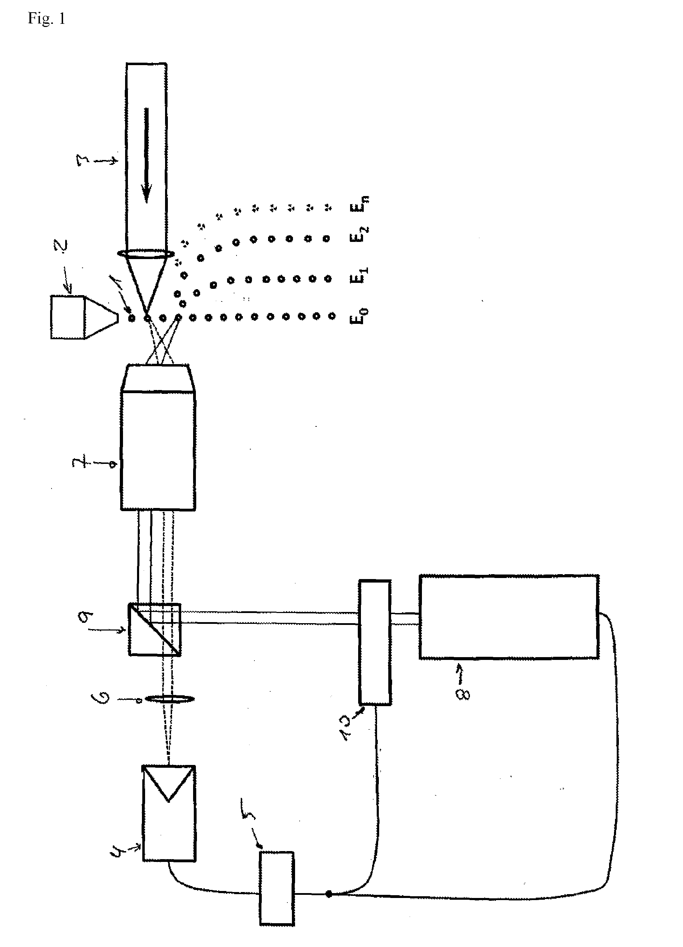

Der schematische Aufbau einer erfindungsgemäßen Vorrichtung ist in Figur 1 gezeigt. Ein Fluidstrom 1, vorliegend in Form von Flüssigkeitströpfchen, wird durch Austretenlassen eines Fluids durch eine Düse 2 erzeugt. Der Fluidstrom kann die Partikel in einer Hüllflüssigkeit aufweisen, und entsprechend weist die Düse 2 vorzugsweise in ihrem Innenvolumen eine Zuleitung für Partikel auf, deren Austrittsöffnung vor der Öffnung der Düse 1 angeordnet ist, während eine zweite Zuleitung für Hüllflüssigkeit im Innenvolumen der Düse 1 endet. Besonders bevorzugt weist die Düse 1 in ihrem Innenvolumen eine Vibrationseinrichtung auf, vorzugsweise mit einer Schwingungsfläche etwa parallel und in einem Abstand zur Querschnittsfläche ihrer Düsenöffnung, um austretendes Fluid mit mechanischen Schwingungen parallel zur Strömungsrichtung aus der Düse zu beaufschlagen. Entsprechend ist bevorzugt, dass der Fluidstrom ein Flüssigkeitsstrom ist, der durch Beaufschlagung der Flüssigkeit mit mechanischen Vibrationen innerhalb der Düse 1 zur Bildung eines Tröpfchenstroms veranlasst wird, wobei die Partikel in der Flüssigkeit enthalten sind, vorzugsweise jeweils in Abschnitten des Flüssigkeitsstroms vereinzelt sind, die bei Tröpfchenbildung jeweils einzelne Tröpfchen bilden.

Eine Bestrahlungseinrichtung 3 ist gegen den Fluidstrom 1 gerichtet und vorzugsweise auf den Fluidstrom 1 fokussiert. Die Bestrahlungseinrichtung 3 dient zur Anregung eines Farbstoffs, mit dem Partikel kontaktiert wurden, insbesondere zur Anregung des Fluoreszenzfarbstoffs, mit dem zumindest ein Bestandteil eines Partikels spezifisch markiert wurde.

In einem Abstand zum Fluidstrom 1 ist ein Detektor 4, insbesondere ein optischer bzw. Photodetektor angeordnet, der die vom Fluidstrom 1 emittierte Strahlung, insbesondere Fluoreszenz, detektiert und ein Meßsignal erzeugt und an eine mit ihm verbundene Steuereinheit 5 übermittelt. Der Detektor 4 ist vorzugsweise so angeordnet, dass vom Fluidstrom 1 und/oder vom Partikel emittierte Strahlung über einen Strahlungsgang zum Detektor 4 gelangt, in welchem zumindest eine Sammellinse 6 angeordnet ist. Besonders bevorzugt ist eine Fokussiereinrichtung 7 in dem Strahlengang angeordnet, der vom Fluidstrom 1 zum Detektor 4 verläuft, durch die optional auch der Strahlengang des Sortierlasers 8 geführt ist. Zur Trennung der Strahlungsgänge der Laserstrahlung des Sortierlasers 8 bzw. des Detektors 4 durch die Fokussiereinrichtung 7 werden diese in einem Abstand und/oder in einem Winkel zueinander in die Fokussiereinrichtung 7 eingekoppelt. Vorzugsweise ist die Fokussiereinrichtung ein Mikroskopobjektiv. Zur Trennung der Strahlungsgänge vom Sortierlaser 8 bzw. zum Detektor 4 ist hier ein Strahlteiler 9 in dem Abschnitt angeordnet, in welchem die Strahlungsgänge des Sortierlasers 8 und des Detektors 4 nebeneinander, insbesondere parallel zueinander in die Fokussiereinrichtung 7 laufen. Dadurch spiegelt der Strahlteiler 9 die Laserstrahlung des Sortierlasers 8 in einem Winkel, z.B. von 90 ° in die Fokussiereinrichtung 7, während der Strahlteiler 9 die vom Fluidstrom 1 emittierte Strahlung, die durch die Einstrahlung der Bestrahlungseinrichtung 3 erzeugt wurde, aus der Fokussiereinrichtung 7 zum Detektor 4 hindurch treten lässt.

Die Laserstrahlung des Sortierlasers 8 wird vorzugsweise durch einen von der Steuereinheit 5 gesteuerten optischen Schalter 10 gesteuert, sodass die Laserstrahlung unter der Kontrolle des optischen Schalters 10 durch die Fokussiereinrichtung 7 auf einen Abschnitt des Fluidstroms 1 gerichtet wird. Neben dem optischen Schalter 10 kann der Sortierlaser 8 selbst mit der Steuerungseinheit 5 verbunden sein, sodass die Steuerungseinheit 5 auch die Strahlungsleistung des Sortierlasers 8 abhängig von dem vom Detektor 4 empfangenen Detektionssignal steuern kann. Entsprechend kann die Steuerungseinheit 5 auch als Auslöse- bzw. Triggereinheit bezeichnet werden, da sie den optischen Schalter 10 und/oder den Sortierlaser 8, und damit die auf dem Fluidstrom 1 einwirkende Laserstrahlung auslöst. Vorzugsweise weist die Steuerungseinheit eine Verzögerungseinheit auf, und kann entsprechend auch als Trigger - Delay - Einheit bezeichnet werden.

Vom Sortierlaser 8 unter der Kontrolle der Steuereinheit 5 erzeugte Laserstrahlung wird bei Durchlässigkeit des optischen Schalters 10 vom Strahlteiler 9 in die Fokussiereinrichtung 7 eingekoppelt, und auf eine zweite Position eines Abschnitts des Fluidstroms 1 gerichtet, der stromabwärts der ersten Position eines Abschnitts des Fluidstroms 1 ist, für welchen unter Einwirkung der Bestrahlungseinrichtung 3 der Detektor 4 ein Meßsignal erzeugt und an die Steuereinheit 5 übermittelt hat. Wegen der Anordnung der zweiten Position des Abschnitts des Fluidstroms 1 stromabwärts, bzw. zeitlich nach der ersten Position des Abschnitt des Fluidstroms 1, für den der Detektor 4 ein Meßsignal erzeugt, wirkt vom Sortierlaser 8 erzeugte Laserstrahlung in der zweiten Position bei Steuerung mit Verzögerung der Laserbestrahlung zum Meßsignal wegen der Bewegung des Fluidstroms 1 auf den ursprünglich gemessenen Abschnitt des Fluidstroms 1, und entsprechend auf den selben Abschnitt des Fluidstroms 1, für den in der ersten Position das Meßsignal vom Detektor 4 erzeugt wurde.

Die Einwirkung der Laserstrahlung auf den Fluidstrom 1 führt dazu, dass abhängig von der Wellenlänge der Laserstrahlung entsprechend der ersten Ausführungsform Fluid einseitig oberflächennah erwärmt wird, und wegen Expansion, beispielsweise Verdampfung eines Teils eines Flüssigkeitströpfchens, dieser Abschnitt des Fluidstroms ausgelenkt wird, wie schematisch durch die zur linearen Ausrichten Fluidstroms 1 durch die nach rechts abgelenkten Fluidteilströme gezeigt ist. Dabei hängt der Grad der Auslenkung von der durch die Laserbestrahlung eingetragenen Energie ab, sodass der Grad der durch die Laserbestrahlung bewirkten Auslenkung von Abschnitten des Fluidstroms zur Aufteilung der laserbestrahlten Abschnitte des Fluids von den nicht laserbestrahlten Abschnitten führt. Sammelbehälter zum Sammeln der nicht ausgelenkten Abschnitte des Fluidstroms und der ausgelenkten Abschnitte des Fluidstroms können jeweils in einem Abstand zueinander entsprechend des Strömungswegs des nicht laserbestrahlten Fluidstroms (E₀), bzw. entsprechend der Auslenkung laserbestrahlter Abschnitte des Fluidstroms (E 1, E 2, En, mit zunehmender Energie der Laserbestrahlung) angeordnet werden.

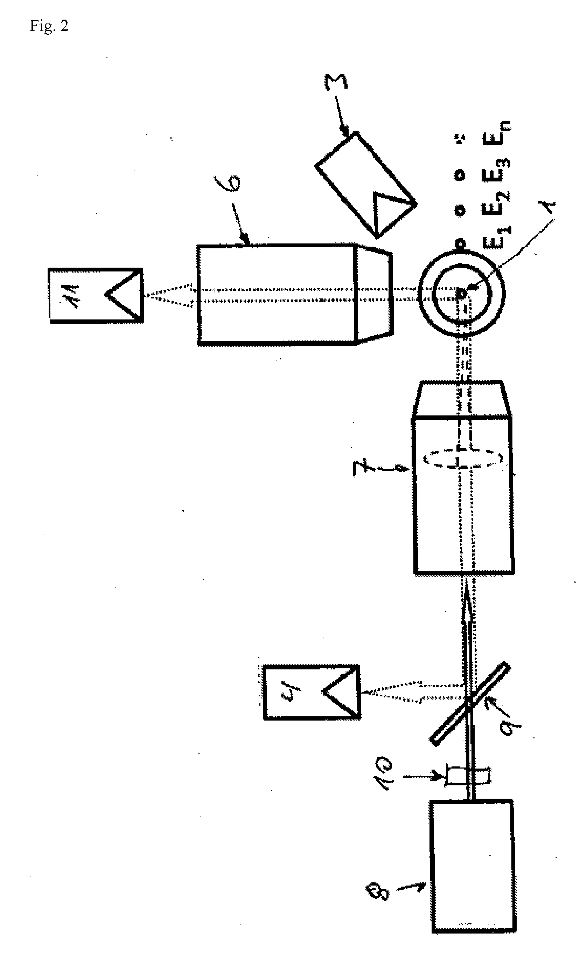

Figur 2 zeigt die Vorrichtung von Figur 1 um 90° gedreht in einer Variante, die neben einem Detektor 4 einen zweiten Detektor 11 enthält, der Strahlung in einem Winkel zu dem Strahlengang detektiert, welche mittels des Objektivs 7 zum (ersten) Detektor 4 geführt wird. Ein solcher zweiter Detektor 11, vorzugsweise mit einer Sammellinse 6, beispielsweise in Form eines Mikroskopobjektivs in seinem Strahlengang, kann zur Detektion einer zweiten Eigenschaft des Fluidstroms bzw. der darin enthaltenen Partikel dienen.

Eine Bestrahlungseinrichtung 3 ist dient zur Fluoreszenzanregung. Der Sortierlaser 8 ist entsprechend Figur 1 mittels eines Strahlteilers 9, vorzugsweise eines dichroitischen Strahlteilers 9, in die Fokussiereinrichtung 7 eingekoppelt, die die Laserstrahlung auf den aus der Düse 2 austretenden Fluidstrom 1 richtet. Die Laserbestrahlung lenkt Abschnitte des Fluidstroms in die entgegengesetzte Richtung ab, und erzeugt Teilfluidströme E1, E2, E3 bis En, wenn die Laserstrahlung eine Wellenlänge aufweist, die vom Fluidstrom 1 absorbiert wird, oder die Laserstrahlung erwärmt Partikel innerhalb des Fluidstroms 1, ohne eine signifikante Ablenkung des Fluidstroms 1 zu bewirken, wenn die Laserstrahlung eine Wellenlänge aufweist, für die der Fluidstrom 1 optisch transparent ist und die vom Partikel absorbiert wird.

In der Fokussiereinrichtung 7 ist schematisch eine Sammellinse gezeigt, die die Laserstrahlung auf dem Fluidstrom 1 bündeln soll.

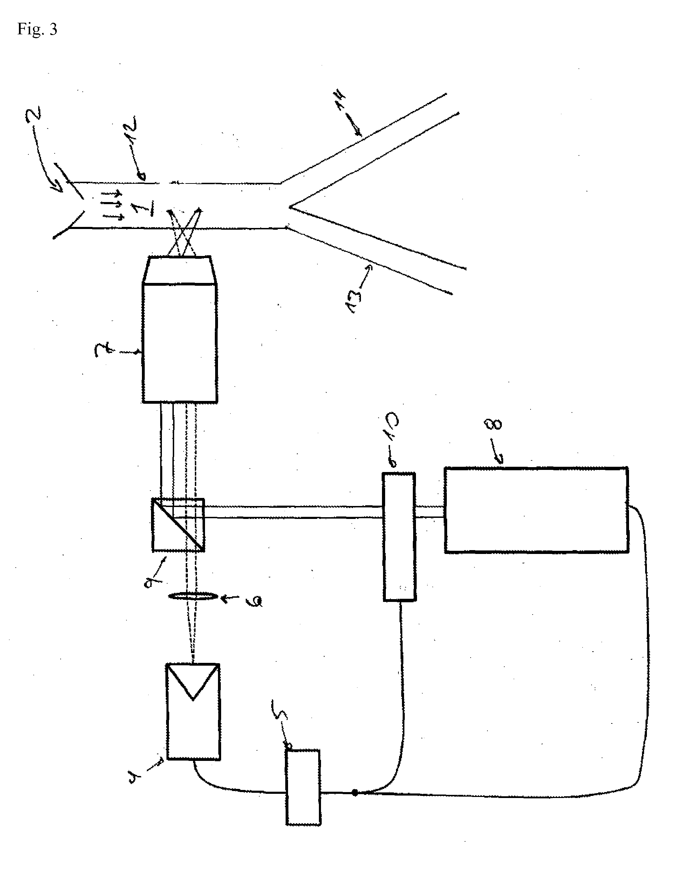

Figur 3 zeigt eine alternative Ausführungsform, in der der Fluidstrom 1 in einem Strömungskanal 12 laminar strömengelassen wird. Hier kann die Düse 2 in Form einer Einlassöffnung an einem Einlassende des Strömungskanals 12 angeordnet sein. Durch die Ausbildung des Fluidstroms 1 als laminarer Fluidstrom 1 kann die erfindungsgemäße Detektion von Fluoreszenz, die von einer Markierung eines Partikels nach Einstrahlung von Anregungsstrahlung von einer Bestrahlungseinrichtung 3 in einem Detektor 4 gemessen werden, und ein in Strömungsrichtung des Fluidstroms 1 stromabwärts angeordneter Abschnitt des Strömungskanals 12 mit Laserstrahlung des Sortierlasers 8 bestrahlt werden, sodass bei Verzögerung der Laserbestrahlung entsprechend der Geschwindigkeit des Fluidstroms 1 wiederum der selbe Abschnitt des Fluidstroms 1 einer Laserbestrahlung ausgesetzt werden kann, für den der Detektor 4 ein Meßsignal erzeugt und an die Steuereinheit 5 übertragen hat.

Entsprechend der ersten Ausführungsform der Erfindung kann vorgesehen sein, dass durch Einstrahlung von Laserstrahlung mit einer Wellenlänge, die vom Fluidstrom absorbiert wird, dass in diesem Abschnitt des Fluidstroms enthaltene Partikel abgelenkt wird. In dieser Ausführungsform geht der Strömungskanal 12 an einer Verzweigung in zwei oder mehr Zweigkanäle 13, 14 über, sodass Partikel entsprechend der Auslenkung durch Laserbestrahlung des Sortierlasers 8 von einem Teil des Fluidstroms 1 in einen Zweigkanal 14 ausgelenkt werden, während Partikel, die nicht durch Laserbestrahlung ausgelenkt wurden, mit dem anderen Teilstrom des Fluidstroms 1 in einen Zweigkanal 13 transportiert werden.

Für die zweite Ausführungsform ist der Sortierlaser 8 eingerichtet, Laserstrahlung mit einer Wellenlänge abzugeben, für die der Fluidstrom 1 optisch transparent ist, die jedoch von markierten Partikeln absorbiert wird. In dieser Ausführungsform werden entsprechend markierte Partikel erwärmt, bzw. nicht markierte Partikel erwärmt, um diese, beispielsweise im Falle von biologischen Zellen, insbesondere Spermatozoen, gezielt zu inaktivieren. Da eine Auslenkung der Partikel in der zweiten Ausführungsform nicht im signifikanten Ausmaß erfolgt, ist eine Aufteilung des Fluidstroms 1 nicht erforderlich.

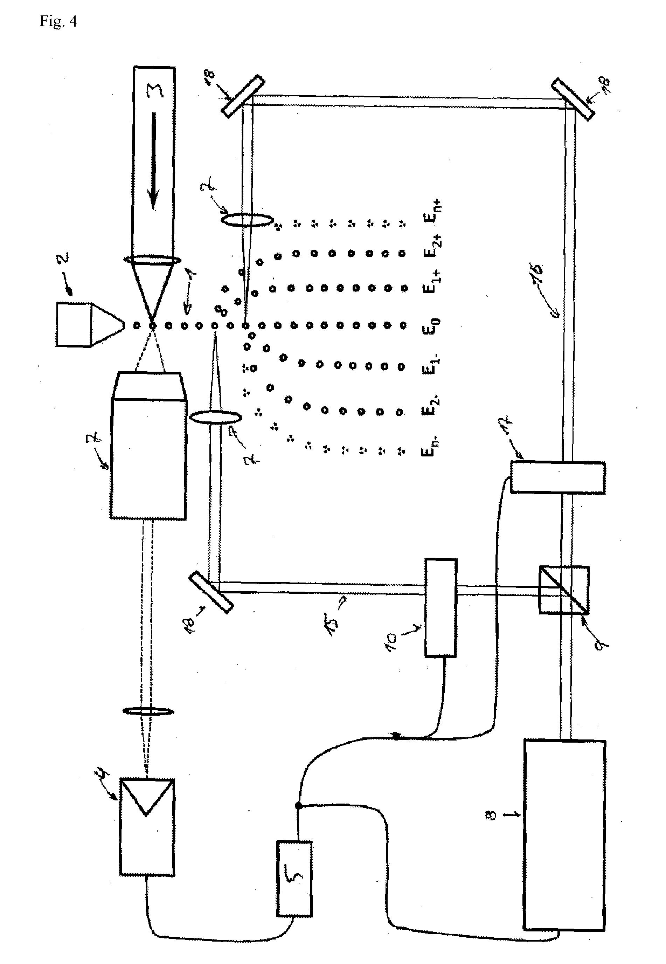

Figur 4 zeigt eine Fortbildung der Ausführungsformen der Erfindung, bei der die vom Sortierlaser 8 erzeugt Laserstrahlung an einem Strahlteiler 9 in einen ersten Teilstrahl 15 und einem zweiten Teilstrahl 16 geteilt wird, wobei in dem ersten Teilstrahl 15 ein (erster) optischer Schalter 10 und im zweiten Teilstrahl ein zweiter optischer Schalter 17 angeordnet ist, die jeweils unabhängig voneinander von der Steuereinheit 5 gesteuert werden, mit der sie verbunden sind. Erster und zweiter Teilstrahl 15, 16 werden jeweils auf den Fluidstrom 1 gerichtet, beispielsweise mittels Spiegeln 18 und vorzugsweise wird der zweite Teilstrahl 16 durch zwei, jeweils in 45° zum Teilstrahl 16 angeordnete Spiegel 18 auf einen Abschnitt des Fluidstroms 1 fokussiert, vorzugsweise mit einer Fokussiereinrichtung 7. Der erste Teilstrahl 15 wird vorzugsweise mittels eines Spiegels 18 auf den Fluidstrom 1 gerichtet, und ebenfalls bevorzugt durch eine Fokussiereinrichtung 7 fokussiert. Besonders bevorzugt ist der erste Teilstrahl 15 in einem Winkel von 90° - 180°, insbesondere 180° zum zweiten Teilstrahl 16 auf den Fluidstrom 1 fokussiert, sodass entsprechend der ersten Ausführungsform sowohl der erste Teilstrahl 15 als auch der zweite Teilstrahl 16 unabhängig voneinander denselben oder beabstandete Abschnitte des Fluidstroms 1 bestrahlen. Entsprechend der ersten Ausführungsform ist es bevorzugt, dass der erste Teilstahl 15 und zweite Teilstrahl 16 in einem Abstand zueinander auf den Fluidstrom 1 fokussiert sind und der Sortierlaser 8 Laserstrahlung mit einer Wellenlänge abgibt, die vom Fluidstrom 1 absorbiert wird. Auf diese Weise können Abschnitte des Fluidstroms 1 durch Einstrahlung des ersten bzw. zweiten Teilstrahls 15, 16 in unterschiedliche Richtungen abgelenkt werden, um die Genauigkeit der Sortierung durch Beabstandung der Abschnitte des Fluidstroms 1 entsprechend des detektierten Meßsignals voneinander zu beabstanden, beispielsweise wie in Figur 4 darstellt, in Fraktionen E₁₊, E₂₊, Eₙ₊ durch die Bestrahlung mit dem ersten Teilstrahl 15 abgelenkt werden, und in entgegengesetzter Richtung in die Fraktionen E₁₋, E ₂₋, Eₙ₋ durch Bestrahlung mit dem zweiten Teilstrahl 16 abgelenkt werden. Nicht bestrahlte Abschnitte des Fluidstroms 1 werden nicht abgelenkt und bilden die Fraktion E₀.

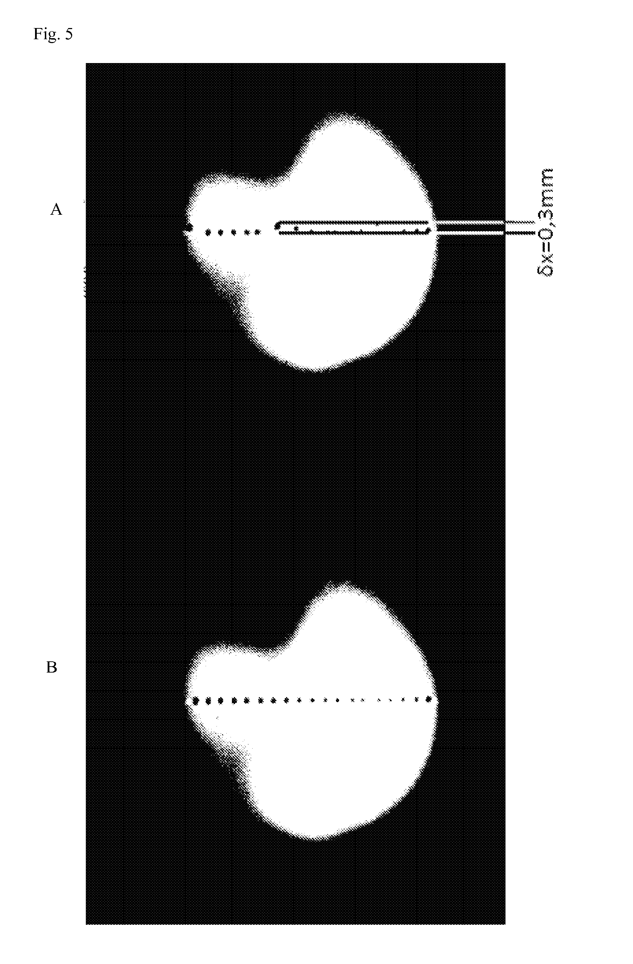

Figur 5 zeigt eine Ultrakurzzeit-Fotografie eines Fluidstroms aus Wasser, unter A) ohne Laserbestrahlung, und unter B) unter gezielter Bestrahlung einzelner Tröpfchen, die die Abschnitte des Fluidstroms darstellen, mit Laserbestrahlung bei einer Wellenlänge von 1041 nm. Die auf ein Tröpfchen des Fluidstroms aufgebrachte Energie betrug etwa 1,8 µJ. Wie aus Fig. 5 B) deutlich wird, werden Abschnitte des Fluidstroms durch die Bestrahlung mit Laserstrahlung bei einer Wellenlänge, die vom Fluidstrom absorbiert wird, in die zur Lasereinstrahlung entgegengesetzte Richtung ausgelenkt. Die Auslenkung betrug in diesem Fall etwa 0,3 mm unmittelbar nach Einwirken der Laserstrahlung.

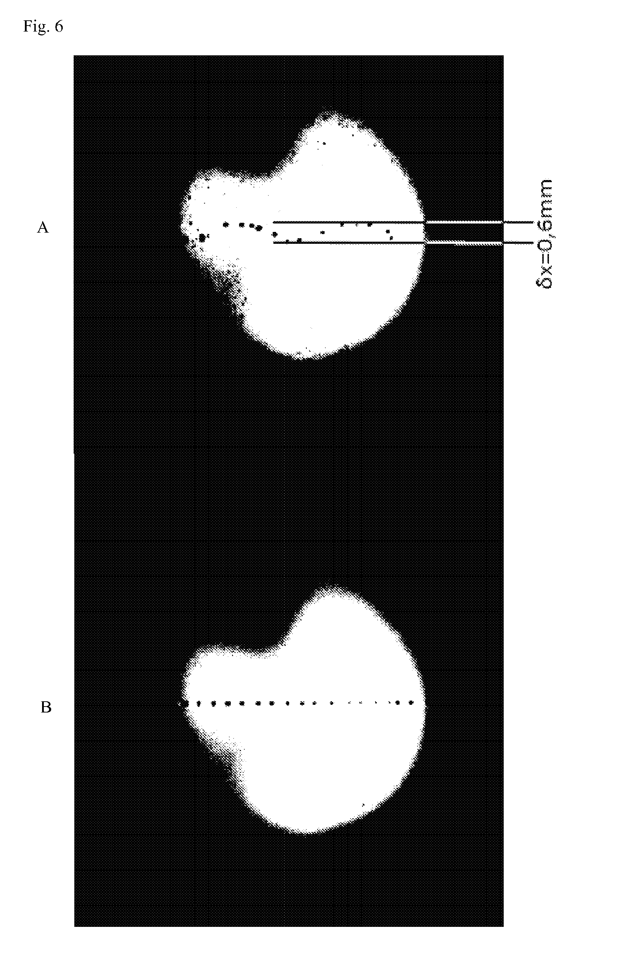

Figur 6 zeigt ultrakurzzeitbelichtete fotografische Aufnahmen entsprechend Figur 5, jedoch mit einem CW-Sortierlaser, der bei 1041 nm mit einer Leistung von 350 mW strahlte und in dessen Strahlengang ein optischer Schalter angeordnet war, sodass die auf ein Fluidtröpfchen abgestrahlte Energie 3,5 µJ betrug. Während Figur 6 A zeigt, dass ohne Einwirkung von Laserstrahlung der Fluidstrom linear verläuft, zeigt Fig. 6 B, dass die eingestrahlte Laserstrahlung zu einer Auslenkung der Flüssigkeitströpfchen um ca. 0,6 mm führt.

Als Beispiel für Partikel bzw. biologische Zellen wurden Bullenspermatozoen verwendet, die nach Gewinnung mittels bekannter Verfahren erhalten und in Tris-Puffer verdünnt und mit Hoechst Bisbenzimid H 33342 bei Raumtemperatur gefärbt waren. Nach dem Färben wurden die Spermatozoen in einem FACS-Gerät, das entsprechend der Beschreibung von US 5,135,759 mit Ausnahme der Sortiereinrichtung gestaltet war, sortiert. Dieses modifizierte Gerät entsprach schematisch Figur 1, und wies einen Sortierlaser (1041 nm, 350 mW auf, der mittels eines Mikroskopobjektivs als Fokussiereinrichtung auf einen Abschnitt des Tröpfchenstroms unterhalb der Düse gerichtet war. Ein im Strahlengang des Sortierlasers angeordneter optischer Schalter wurde durch eine Steuereinheit mit Trigger - Delay - Funktion gesteuert, die auf Basis der Meßsignale gesteuert wurde, die von einem ersten optischen Detektor aufgenommen wurde, der die Höhe des Fluoreszenzsignals des DNA - spezifischen Hoechst- Farbstoffs detektierte, und eines zweiten optischen Detektors, der Strahlung senkrecht zu der Strahlung detektierte, die vom ersten Detektor gemessen wurde, und ein Signal für die Ausrichtung der Spermatozoen nach Austritt aus der Düse lieferte. Die Steuerungseinheit war so eingestellt, dass nur von Spermatozoen, die mit ihrer flachen Seite senkrecht zum Strahlengang des ersten Detektors ausgerichtet waren, ein Steuerungssignal zur Transmission durch den optischen Schalter erzeugt wurde, und überdies ein solches Steuerungssignal nur für X-Chromosomen-haltige Spermatozoen erzeugt wurde, sodass Laserstrahlung des Sortierlasers nur für korrekt ausgerichtete X-Chromosomen-haltige Spermatozoen auf dem Fluidstrom gestrahlt wurde.

Zur Berücksichtigung der zeitlichen Verzögerung zwischen der Detektion der Meßsignale durch den ersten und zweiten Detektor und die Einstrahlung von Laserstrahlung mittels Transmission durch den optischen Schalter, die auch die Berechnungszeit für die Steuerungseinheit berücksichtigte, war die Laserstrahlung auf eine zweite Position eines Abschnitts des Fluidstroms weiter von der Düse entfernt gerichtet, als die erste Position, in der für den selben Abschnitt des Fluidstroms die Fluoreszenz mittels des ersten und zweiten Detektors gemessen wurde.

Eine Analyse von Spermatozoen bei einer Sortierrate von 500/s ergab sich eine Reinheit der gesammelten Fraktion von über 90% X-chromosomenhaltiger Spermatozoen, die zu über 80% motil waren. Die Motilität konnte in einem automatisierten Test (CASA, *computer assisted sperm analyzer*) bei Inkubation bei 37 °C in Tris-Puffer über einen Zeitraum von mindestens 6 h für zumindest 50 % der Spermatozoen nachgewiesen werden.

Eine Kontrolle der Integrität der Acrosomen der sortierten Fraktion ergab, dass im Wesentlichen keine Acrosomenschäden aufgetreten waren. Insbesondere wurde festgestellt, dass die Detektion mit Propidiumiodid für 85 % negativ war, und die Analyse mit PSA (PSA-Konjugat mit FITC) ebenfalls für 90 % der Spermatozoen in der sortierten Fraktion negativ war, d.h. keine Schäden durch Zerstörung der Acrosomenmembran zeigte.

Bei Einstellung der Steuerungseinheit so, dass Laserstrahlung mittels des optischen Schalters nur bei Detektion X-chromosomenhaltiger Spermatozoen, die korrekt ausgerichtet waren, auf den Fluidstrom einwirken gelassen wurde, konnte entsprechend eine X-chromosomenhaltige Spermatozoenfraktion erzeugt werden, die im Wesentlichen die gleichen Zelleigenschaften zeigten.

Bei einem Vergleichsversuch wurde eine durchflusszytometrische Vorrichtung mit Sortiereinheit, die ein elektrisches Feld zwischen zwei Platten erzeugt, und bei der der abreißende Tröpfchenstrom entsprechend des Detektorsignals elektrisch aufgeladen wird, zur Sortierung von Spermatozoen verwendet. In einem ersten Ansatz wurden Spermatozoen in Hüllflüssigkeit (Tris-Puffer) in einem Tröpfchenstrom von 2500/s vereinzelt und ohne Laserbestrahlung, ohne elektrische Aufladung des Tröpfchenstroms durch das elektrische Feld (..........Spannung/Stärke) fallengelassen. Die Tröpfchen wurden unmittelbar auf Objektträgern aufgefangen und es wurde die Motilität der Spermien optisch mittels automatisiertem Verfahren (CASA) bestimmt. Zum Vergleich wurde die Motilität eines Aliquots der nicht durchflusszytometrisch behandelten Probe bestimmt, und die Motilität von Spermatozoen in gleichermaßen aufgefangenen Tröpfchen, die im Tröpfchenstrom, jedoch ohne elektrisches Feld dieselbe Vorrichtung passiert hatten. Die mittlere Motilität für die Spermatozoen, die das elektrische Feld passiert hatten, betrug 13, 333, Standardabweichung (SA) 4,082, SEM 1,667, während die Spermatozoen, die mit Ausnahme des elektrischen Felds gleichermaßen die Vorrichtung passiert hatten, und das nicht durchflusszytometrisch behandelte Aliquot eine mittlere Motilität von 67,500, SA 4,183, SEM 1,708. Der Unterschied von 54,167, t=22,699 (10 Freiheitsgrade) ist mit P≤0,001 signifikant (einschließlich Normalitätstest P=0,055, Varianztest P=0,670). Dieser Vergleich zeigt, dass allein das elektrische Feld der herkömmlichen Sortiereinrichtung zur Ablenkung von Zellen in getrennte Fraktionen zu einer Zellschädigung führt, die sich in einer hochsignifikanten Abnahme der Motilität (P≤0,001) äußert. Der Laser war jeweils ausgeschaltet und konnte daher keinen Einfluß haben.

### Bezugszeichenliste:

- 1: Fluidstrom
- 2: Düse
- 3: Bestrahlungseinrichtung
- 4: Detektor
- 5: Steuereinheit
- 6: Sammellinse
- 7: Fokussiereinrichtung
- 8: (Sortier-)Laser
- 9: Strahlteiler
- 10: optischer Schalter
- 11: zweiter Detektor
- 12: Strömungskanal
- 13: Zweigkanal
- 14: Zweigkanal
- 15: erster Teilpfad
- 16: zweiter Teilpfad
- 17: zweiter optischer Schalter
- 18: Spiegel

## Patentansprüche

1. Vorrichtung zur Selektion von Partikeln, die
eine Düse (2) zur Erzeugung eines Partikel enthaltenden Fluidstroms (1),
eine Bestrahlungseinrichtung (3), die auf den aus der Düse (2) austretenden Fluidstrom (1) gerichtet ist,
einen Detektor (4), der auf den Fluidstrom (1) gerichtet ist und zur Erzeugung von Meßsignalen eingerichtet ist,
eine mit dem Detektor (4) verbundene Steuerungseinheit, die zum Empfang von Detektionssignalen und zur Erzeugung von Steuerungssignalen für eine Selektionseinheit eingerichtet ist und
eine mit der Steuerungseinheit verbundene Selektionseinheit, die zum Empfang der Steuersignale eingerichtet ist, aufweist,
**dadurch gekennzeichnet, dass**
die Selektionseinheit einen Laser (8) zur Erzeugung von Laserstrahlung aufweist, dessen Strahlengang auf den Fluidstrom (1) gerichtet ist.

2. Vorrichtung nach Anspruch 1, **dadurch gekennzeichnet, dass** der Laser (8)ein CW-Laser ist, in dessen Strahlengang ein von der Steuereinheit gesteuerter optischer Schalter (10) angeordnet ist.

3. Vorrichtung nach einem der voranstehenden Ansprüche, **dadurch gekennzeichnet, dass** der Detektor (4) ein optischer Detektor ist, der auf eine erste Position des Fluidstroms (1) gerichtet ist, und der Laser (4) auf eine in einem größeren Abstand zur Düse (2) als die erste Position angeordnete zweite Position des Fluidstroms (1) gerichtet ist.

4. Vorrichtung nach einem der voranstehenden Ansprüche, **dadurch gekennzeichnet, dass** die Steuerungseinheit eine Verzögerungseinheit aufweist, die eingerichtet ist, die Einstrahlung der Laserstrahlung auf den Fluidstrom (1) zu verzögern.

5. Vorrichtung nach einem der voranstehenden Ansprüche, **dadurch gekennzeichnet, dass** im Strahlengang des Lasers (8) eine Fokussiereinrichtung (7) angeordnet ist, die den Laserstrahl auf den Fluidstrom (1) fokussiert und der Detektor (4) ein optischer Detektor ist, der in einem durch die Fokussiereinrichtung (7) angeordneten Strahlengang angeordnet ist.

6. Vorrichtung nach einem der voranstehenden Ansprüche, **dadurch gekennzeichnet, dass** der Laser (8) eingerichtet ist, Strahlung mit einer vom Fluidstrom (1) absorbierbaren Wellenlänge zu erzeugen.

7. Vorrichtung nach Anspruch 6, **dadurch gekennzeichnet, dass** sie einen weiteren von der Steuerungseinheit gesteuerten Laser (8) aufweist, der eingerichtet ist, Strahlung mit einer nicht vom Fluidstrom (1) absorbierbaren Wellenlänge zu erzeugen und dessen Strahlengang auf den Fluidstrom (1) gerichtet ist.

8. Vorrichtung nach einem der Ansprüche 1 bis 5, **dadurch gekennzeichnet, dass** der Laser (8) eingerichtet ist, Strahlung mit einer nicht vom Fluidstrom absorbierbaren Wellenlänge zu erzeugen.

9. Vorrichtung nach einem der voranstehenden Ansprüche, **dadurch gekennzeichnet, dass** ein Strahlteiler (9) im Strahlengang des Lasers (8) angeordnet ist, der den Laserstrahl in einen ersten auf den Fluidstrom (1) gerichteten Teilpfad (15) und einen zweiten auf den Fluidstrom gerichteten Teilpfad (16) teilt, wobei im ersten Teilpfad (15) und/oder im zweiten Teilpfad (16) zumindest ein Spiegel (18) zur Ausrichtung von Laserstrahlung auf den Fluidstrom (1) angeordnet ist.

10. Verfahren zur Selektion von Partikeln durch
Ausbildung eines die Partikel enthaltenden Fluidstroms (1) mittels einer Düse (2),
Detektieren einer Eigenschaft eines Partikels in dem Fluidstrom (1),
Erzeugung eines für die Eigenschaft spezifischen Detektionssignals,
Erzeugung eines Steuersignals auf Basis des Detektionssignals,
Steuern einer Selektionseinheit mittels des Steuersignals und
Behandeln eines der Partikel in Abhängigkeit von dem Steuersignal,
**dadurch gekennzeichnet, dass**
ein Abschnitt des Fluidstroms (1) von der Selektionseinheit mit Laserstrahlung bestrahlt wird.

11. Verfahren nach Anspruch 10, **dadurch gekennzeichnet, dass** die Laserstrahlung in einer zweiten Position auf den Fluidstrom (1) gerichtet ist, die in einem größeren Abstand zur Düse (2) als die erste Position des Fluidstroms (1) angeordnet ist, in welcher die Eigenschaft detektiert wird, und die Laserstrahlung eine Wellenlänge aufweist, die vom Fluid absorbierbar ist.

12. Verfahren nach Anspruch 10, **dadurch gekennzeichnet, dass** die Laserstrahlung in einer zweiten Position auf den Fluidstrom (1) gerichtet ist, die in einem größeren Abstand zur Düse (2) als die erste Position des Fluidstroms (1) angeordnet ist, in welcher die Eigenschaft detektiert wird, und die Laserstrahlung eine Wellenlänge aufweist, die vom Fluid nicht absorbierbar ist.

13. Verfahren nach einem der Ansprüche, **dadurch gekennzeichnet, dass** die Partikel mit einem Farbstoff oder Farbstoffkonjugat, das einen für einen Bestandteil eines Partikels spezifischen Bindeanteil aufweist, kontaktiert sind und das Detektionssignal durch Detektion des Farbstoffs erzeugt wird.

14. Präparat lebender isolierter Zellen, ausgenommen menschliche Keimzellen, die aus einer gemischten Zellpopulation stammen und in zumindest einer Eigenschaft homogen sind, **gekennzeichnet durch** Mitochondrien mit natürlicher Struktur der isolierten Zellen.

15. Präparat nach Anspruch 14, **dadurch gekennzeichnet, dass** die Zellen nicht-menschliche Säugerspermatozoen sind, in dem mindestens 90% der lebens- und befruchtungsfähigen Spermatozoen nur das Y-Chromosom oder nur das X-Chromosom aufweisen.

16. Präparat nach Anspruch 15, **dadurch gekennzeichnet, dass** die Spermatozoen eine Vitalität, gemessen als Motilität von mindestens 50% der Spermatozoen über mindestens 6h bei 37°C in physiologischem Puffer aufweisen, und einen Anteil von mindestens 90% der Spermatozoen mit intaktem Acrosom.
